# EUROPEAN PATENT APPLICATION

(11) **EP 3 813 422 A1**
(43) Date of publication of application: **28.04.2021**
(21) Application number: 19204912.0
(22) Date of filing: 23.10.2019
(51) Int. Cl.: H04W 36/00, H04W 4/02, H04W 16/28

(54) **ADJUSTING AN ANTENNA DIAGRAM**

(71) Applicant: Volkswagen AG, 38440 Wolfsburg (DE)
(72) Inventor: Zielinski, Ernst, 44803 Bochum (DE); Schmitz, Steffen, 46485 Wesel (DE)

(57) **Abstract**

Embodiments provide a vehicle, a network entity, user equipment, methods, computer programs, and apparatuses for user equipment and a network entity for adjusting an antenna diagram. The method (10) for user equipment, UE (100; 110; 120), of a mobile communication system (400), comprises adjusting (12) an antenna diagram of an adjustable antenna used for communicating in the mobile communication system (400); generating (14) information on an adjusted antenna diagram; and transmitting (16) the information on the adjusted antenna diagram to a network entity (200) of the mobile communication system (400).

## Description

The present invention relates to a vehicle, a network entity, user equipment, methods, computer programs, and apparatuses for user equipment and for a network entity for adjusting an antenna diagram, more specifically, but not exclusively, to a concept for determining and distributing antenna adjustment parameters along a route of vehicles.

Nowadays, mobile communication in terms of voice and data is well established. However, network coverage is not 100%. In some areas the network coverage may be poor, which may be especially true in sparsely populated areas. The need for vehicles of being always connected with the network becomes more relevant in the future. It may even become a prerequisite for vehicle users and vehicle manufacturers. The 3^{rd} Generation Partnership Project specifies a 5^{th} Generation or New Radio (3GPP 5G NR) system, which may offer more flexibility for antenna capabilities. For example, reconfigurable/smart antennas may be designed to be flexible in directivity to improve the link/coverage quality for a use case in a dynamic environment.

Document US 2016/0165548 A1 describes a concept for setting a transmission power of a vehicular relay transceiver in a mobile communication system. Information on a state of the vehicle is used to determine a transmission power of a common signal of a cell generated by a mobile relay station. A handover behavior of mobile transceivers associated with the mobile relay station transceiver is therewith influenced.

Document WO 2018/182706 A1 discloses a beam steering method that allows directing wireless energy of transmissions in a mobile communication system into an area of interest. A level of directivity of a beam may be adapted to reduce interference caused to neighboring systems.

There is a demand for an improved concept for antenna utilization in mobile communication systems.

Embodiments are based on the finding that the vehicular environment may offer some specifics that may be exploited using smart antennas or adjustable antennas. Considering properties specific to a vehicle, improvements in a mobile communication system may be achieved with respect to link performance, link management, system performance such as handover strategies, load balancing etc. Such properties may comprise antenna implementations reduced to some variants, movement profiles limited to roads, knowledge about actual and future positions/locations, routes during service provision, additional capabilities of communication equipment (antennas, control option for the antennas) and synergy effects with the capabilities/functions of a serving mobile communication system (e.g. 5G), etc.

Embodiments are further based on the finding that smart antenna systems are used for link performance enhancements, but their combination with vehicle specific properties offers further potential. Antenna settings may be collected from vehicles travelling along a certain route and such settings may be re-used for other vehicles travelling the same route. Adjustment efforts (e.g. time, complexity) and according resource consumption at the vehicles may be reduced, performance may be enhanced and a basis for prediction may be created.

Embodiments provide a method for user equipment, UE, of a mobile communication system. The method comprises adjusting an antenna diagram of an adjustable antenna used for communicating in the mobile communication system and generating information on an adjusted antenna diagram. The method further comprises transmitting the information on the adjusted antenna diagram to a network entity of the mobile communication system. Embodiments may make information on adjustable antenna pattern available for the network. This information may be beneficially exploited in the network in many ways.

For example, the information on the adjusted antenna diagram may comprise one or more elements of the group of information on a location of the UE, information on a direction of a main lobe of the adjusted antenna diagram, information on a UE type, information on one or more steering parameters for the adjustable antenna and/or information on an antenna type used at the UE. With this information the network may be enabled to determine a better coverage/service map of an area. Such information may further be used for load balancing and hand over in the network.

In some embodiments the method comprises receiving information supporting antenna diagram adjustments from the network entity of the mobile communication system. UEs may receive information that aids antenna adjustments. Link performance and performance in general at a UE may be increased using such information.

The information supporting antenna diagram adjustments may comprise one or more elements of the group of information on a location at which the information supporting the antenna diagram adjustments should be applied, information on a direction of a main lobe of the adjusted antenna diagram, information on a UE type, information on one or more steering parameters for the adjustable antenna and/or information on an antenna type for which the information supporting the antenna diagram adjustments should be applied. Embodiments may enable more advance antenna adaption based on additional information provided by the network. More advanced antenna tuning mechanisms or a better fine tuning may be enabled at a UE being able to build upon the information provided by the network.

For example, the information supporting the antenna diagram adjustments on the adjusted antenna diagram may comprise a time course or a road map of antenna settings. Such information may include beam steering parameters along a road or road section. The method may comprise predicting a quality of service based on the time course or the road map and planning a handover of the UE based on the predicted quality of service. With the time course or road map (e.g. a time series or information on the antenna pattern along the road) timely planning or planning in advance may be enabled.

Embodiments further provide a method for a network entity of a mobile communication system. The method comprises receiving information on an adjusted antenna diagram from user equipment, UE, of the mobile communication system and storing the information on the adjusted antenna diagram. The method further comprises providing the information on the adjusted antenna diagram to another UE of the mobile communication system to support antenna diagram adjustments at the other UE. In embodiments UEs may benefit from being provided with information on antenna diagram adjustments. That way a time for finding appropriate antenna settings or adjustments may be decreased.

The information on the adjusted antenna may comprise information on a location of the UE. The method may further comprise providing the information on the adjusted antenna diagram to another user equipment of the mobile communication system for use at the location. Hence, embodiments may enable re-using of antenna settings at the same location. That way, link quality and quality of service may be improved for that location.

In further embodiments the method may further comprise receiving information on adjusted antenna diagrams from a plurality of UEs of the mobile communication system. Embodiments may determine and store a map of antenna settings or antenna diagram adjustments for provision to UEs. That way, UEs can be provided with such information in advance, e.g. when it can be predicted that a UE travels along certain path, for example, in case the UE is a vehicle or a car/train/bus passenger.

The information on the adjusted antenna may comprise receiving information on a UE type and/or information on an antenna type used at the UE. Embodiments may enable provision of information on antenna settings or adjustments, which is tailored to a UE or antenna type. The method may further comprise providing the information on the adjusted antenna to the other UE if the other UE is of the same type and/or use the same antenna type. Signaling overhead may be efficiently managed by provision of antenna information to matching types of antennas or UEs. For example, the information on the adjusted antenna diagram comprises one or more steering parameters for an adjustable antenna. Directing a main lobe of an antenna diagram may be accelerated using one or more steering parameters.

In some embodiments the method may further comprise determining a time course or a road map of antenna settings based on the received information on the adjusted antenna diagram, and providing information on the time course or the road map to the other UE. Embodiments may enable to signal information that allows adjusting an adjustable antenna at a UE over time or a along a trajectory of the UE.

A further embodiment is an apparatus for a UE of a mobile communication system. The apparatus comprises one or more interfaces for communicating in the mobile communication system and a control module configured to carry out one of the methods described herein. Another embodiment is an apparatus for a network entity of a mobile communication system. The apparatus comprises one or more interfaces for communicating in the mobile communication system and a control module configured to carry out one of the methods described herein.

Embodiments further provide a computer program having a program code for performing one or more of the described methods, when the computer program is executed on a computer, processor, or programmable hardware component. A further embodiment is a computer readable storage medium storing instructions which, when executed by a computer, processor, or programmable hardware component, cause the computer to implement one of the methods described herein.

Some other features or aspects will be described using the following non-limiting embodiments of apparatuses or methods or computer programs or computer program products by way of example only, and with reference to the accompanying figures, in which:
Fig. 1 illustrates a block diagram of an embodiment of a method for a UE of a mobile communication system;
Fig. 2 illustrates a block diagram of an embodiment of a method for a network entity of a mobile communication system;
Fig. 3 illustrates block diagrams of embodiments of apparatuses for a UE and a network entity, an embodiment of a UE, an embodiment of a network entity, and an embodiment of a mobile communication system;
Fig. 4 illustrates antenna diagram adjustment in an embodiment;
Fig. 5 illustrates adaptively adjusted antenna directivity and link performance/coverage in an embodiment;
Fig. 6 illustrates approaches to identify the optimal parameters for adaptive reconfigurable smart antenna systems in embodiments;
Fig. 7 illustrates a steering parameter data base in an embodiment; and
Fig. 8 illustrates UE based Hand Over (HO) initiation in an embodiment.

Various example embodiments will now be described more fully with reference to the accompanying drawings in which some example embodiments are illustrated. In the figures, the thicknesses of lines, layers or regions may be exaggerated for clarity. Optional components may be illustrated using broken, dashed or dotted lines.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

As used herein, the term "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "includes" or "including", when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

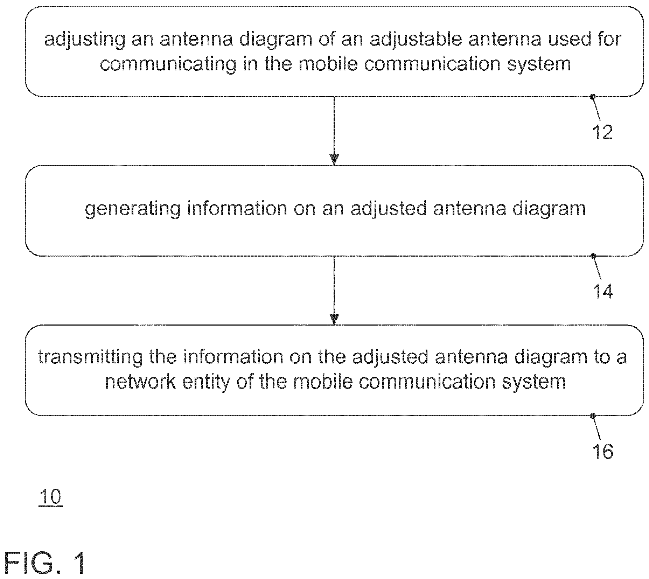

Fig. 1 illustrates a block diagram of an embodiment of a method 10 for user equipment, UE, of a mobile communication system. The method 10 comprises adjusting 12 an antenna diagram of an adjustable antenna used for communicating in the mobile communication system. The method 10 further comprises generating 14 information on an adjusted antenna diagram and transmitting 16 the information on the adjusted antenna diagram to a network entity of the mobile communication system.

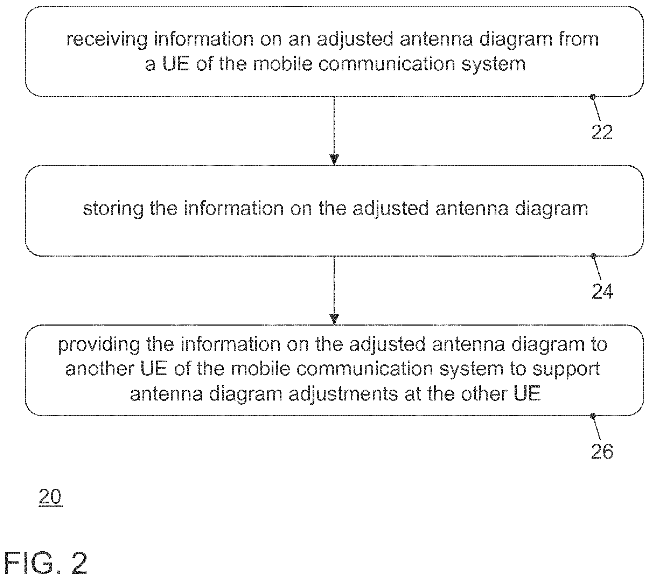

Fig. 2 illustrates a block diagram of an embodiment of a method 20 for a network entity of a mobile communication system. The method 20 comprises receiving 22 information on an adjusted antenna diagram from a UE of the mobile communication system. The method 20 further comprises storing 24 the information on the adjusted antenna diagram and providing 26 the information on the adjusted antenna diagram to another UE of the mobile communication system to support antenna diagram adjustments at the other UE.

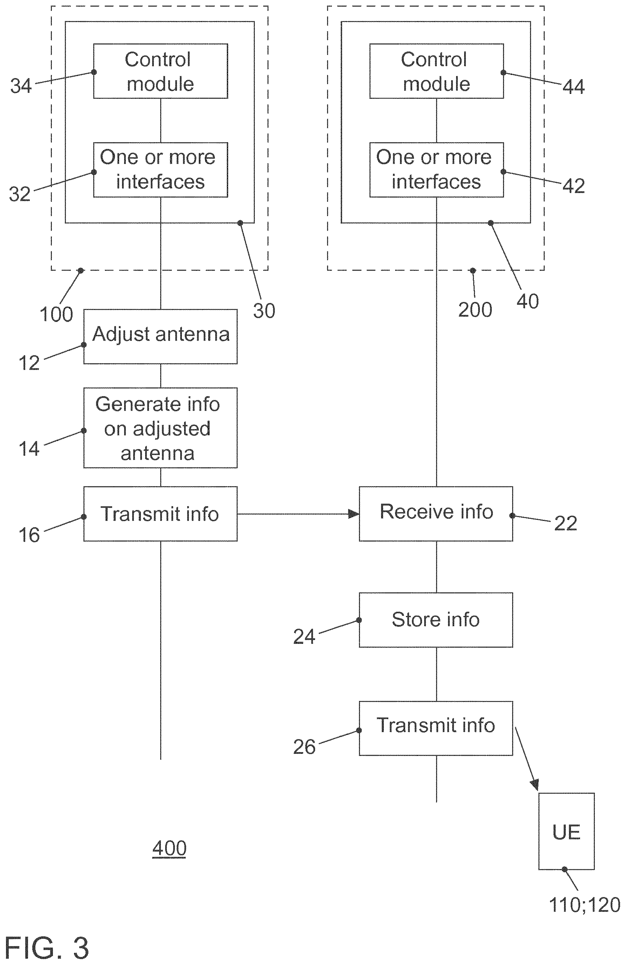

Fig. 3 illustrates block diagrams of embodiments of apparatuses 30, 40 for a UE 100 and a network entity 200, an embodiment of a UE 100 and an embodiment of a network entity 200. Fig. 3 further illustrates an embodiment of a mobile communication system 400. The apparatus 30 for the UE 100 of the mobile communication system 400 comprises one or more interfaces 32 for communicating in the mobile communication system 400. The apparatus 30 further comprises a control module 34, which is coupled to the one or more interfaces 32 and which is configured to carry out one of the methods described herein. The apparatus 40 for the network entity 100 of the mobile communication system 400 comprises one or more interfaces 42 for communicating in the mobile communication system 400. The apparatus 40 further comprises a control module 44, which is coupled to the one or more interfaces 42 and which is configured to carry out one of the methods described herein. As optional embodiments Fig. 3 further illustrates a UE 100 and a network entity 200 in broken lines. Another embodiment is a mobile communication system 400 comprising an embodiment of the UE and an embodiment of the network entity 200.

The apparatuses 30, 40, the UE 100 and the entity 200 (e.g. the vehicles of the platoon) may communicate through a mobile communication system 400. The mobile communication system may, for example, correspond to one of the Third Generation Partnership Project (3GPP)-standardized mobile communication networks, where the term mobile communication system is used synonymously to mobile communication network. The messages (input data, measured data, control information, antenna information) may hence be communicated through multiple network nodes (e.g. one or more UE, base station, infrastructure, etc.) and the mobile communication system.

The mobile or wireless communication system may correspond to a mobile communication system of the 5th Generation (5G, or New Radio) and may use mm-Wave technology. The mobile communication system may correspond to or comprise, for example, a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, a Worldwide Inter-operability for Microwave Access (WIMAX) network IEEE 802.16 or Wireless Local Area Network (WLAN) IEEE 802.11, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

Service provision may be carried out by a network component, such as a base station transceiver, a relay station or a UE, e.g. coordinating service provision in a cluster or group of multiple UEs/vehicles. A base station transceiver can be operable or configured to communicate with one or more active mobile transceivers/vehicles and a base station transceiver can be located in or adjacent to a coverage area of another base station transceiver, e.g. a macro cell base station transceiver or small cell base station transceiver. Hence, embodiments may provide a mobile communication system comprising two or more mobile transceivers/vehicles 100 and one or more base station transceivers 200, wherein the base station transceivers may establish macro cells or small cells, as e.g. pico-, metro-, or femto cells. A mobile transceiver or UE may correspond to a smartphone, a cell phone, a laptop, a notebook, a personal computer, a Personal Digital Assistant (PDA), a Universal Serial Bus (USB) -stick, a car, a vehicle, a road participant, a traffic entity, traffic infrastructure etc. A mobile transceiver may also be referred to as User Equipment (UE) or mobile in line with the 3GPP terminology.

A base station transceiver can be located in the fixed or stationary part of the network or system. A base station transceiver may be or correspond to a remote radio head, a transmission point, an access point, a macro cell, a small cell, a micro cell, a femto cell, a metro cell etc. A base station transceiver can be a wireless interface of a wired network, which enables transmission of radio signals to a UE or mobile transceiver. Such a radio signal may comply with radio signals as, for example, standardized by 3GPP or, generally, in line with one or more of the above listed systems. Thus, a base station transceiver may correspond to a NodeB, an eNodeB, a gNodeB, a Base Transceiver Station (BTS), an access point, a remote radio head, a relay station, a transmission point, etc., which may be further subdivided in a remote unit and a central unit.

A mobile transceiver 100 or vehicle can be associated with a base station transceiver or cell. The term cell refers to a coverage area of radio services provided by a base station transceiver, e.g. a NodeB (NB), an eNodeB (eNB), a gNodeB, a remote radio head, a transmission point, etc. A base station transceiver may operate one or more cells on one or more frequency layers, in some embodiments a cell may correspond to a sector. For example, sectors can be achieved using sector antennas, which provide a characteristic for covering an angular section around a remote unit or base station transceiver. In some embodiments, a base station transceiver may, for example, operate three or six cells covering sectors of 120° (in case of three cells), 60° (in case of six cells) respectively. A base station transceiver may operate multiple sectorized antennas. In the following a cell may represent an according base station transceiver generating the cell or, likewise, a base station transceiver may represent a cell the base station transceiver generates.

An apparatus 30, 40 may be comprised in a server, a base station, a NodeB, a UE, a relay station, or network entity in embodiments. It is to be noted that the term network entity or component may comprise multiple sub-components, such as a base station, a server, etc.

In embodiments the one or more interfaces 32 may correspond to any means for obtaining, receiving, transmitting or providing analog or digital signals or information, e.g. any connector, contact, pin, register, input port, output port, conductor, lane, etc. which allows providing or obtaining a signal or information. An interface may be wireless or wireline and it may be configured to communicate, i.e. transmit or receive signals, information with further internal or external components. The one or more interfaces 32 may comprise further components to enable according communication in the mobile communication system, such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, etc. The one or more interfaces 32 may be coupled to one or more antennas, which may correspond to any transmit and/or receive antennas, such as horn antennas, dipole antennas, patch antennas, sector antennas etc. The antennas may be arranged in a defined geometrical setting, such as a uniform array, a linear array, a circular array, a triangular array, a uniform field antenna, a field array, combinations thereof, etc. In some examples the one or more interfaces 32 may serve the purpose of transmitting or receiving or both, transmitting and receiving, information, such as information, input data, control information, further information messages, etc.

As shown in Fig. 3 the respective one or more interfaces 32, 42 are coupled to the respective control modules 34, 44 at the apparatuses 30, 40. In embodiments the control module 34, 44 may be implemented using one or more processing units, one or more processing devices, any means for processing, such as a processor, a computer or a programmable hardware component being operable with accordingly adapted software. In other words, the described functions of the control module 34, 44 may as well be implemented in software, which is then executed on one or more programmable hardware components. Such hardware components may comprise a general-purpose processor, a Digital Signal Processor (DSP), a microcontroller, etc.

In embodiments, communication, i.e. transmission, reception or both, may take place among mobile transceivers/vehicles 100 directly, e.g. forwarding input data or control information to/from a control center. Such communication may make use of a mobile communication system. Such communication may be carried out directly, e.g. by means of Device-to-Device (D2D) communication. Such communication may be carried out using the specifications of a mobile communication system. An example of D2D is direct communication between vehicles, also referred to as Vehicle-to-Vehicle communication (V2V), car-to-car, Dedicated Short Range Communication (DSRC), respectively. Technologies enabling such D2D-communication include 802.11 p, 3GPP systems (4G, 5G, NR and beyond), etc.

In embodiments, the one or more interfaces 32, 42 can be configured to wirelessly communicate in the mobile communication system. In order to do so radio resources are used, e.g. frequency, time, code, and/or spatial resources, which may be used for wireless communication with a base station transceiver as well as for direct communication. The assignment of the radio resources may be controlled by a base station transceiver, i.e. the determination which resources are used for communicating (be it D2D or communication between a base station and a UE) and which are not. Here and in the following radio resources of the respective components may correspond to any radio resources conceivable on radio carriers and they may use the same or different granularities on the respective carriers. The radio resources may correspond to a Resource Block (RB as in LTE/LTE-A/LTE-unlicensed (LTE-U)), one or more carriers, sub-carriers, one or more radio frames, radio sub-frames, radio slots, one or more code sequences potentially with a respective spreading factor, one or more spatial resources, such as spatial sub-channels, spatial precoding vectors, any combination thereof, etc. For example, in direct Cellular Vehicle-to-Anything (C-V2X), where V2X includes at least V2V, V2-Infrastructure (V2I), V2-network (V2N), etc., transmission according to 3GPP Release 14 onward can be managed by infrastructure (so-called mode 3) or run in a UE.

As shown in Fig. 3 on the UE 100 side the apparatus 30 may be configured to adjust 12 an antenna diagram of an adjustable antenna used for communicating in the mobile communication system 400. The apparatus 30 may generate 14 information on an adjusted antenna diagram and transmit 16 the information on the adjusted antenna diagram to a network entity of the mobile communication system 400. On the network entity's 200 side the apparatus 40 is configured to receive 22 information on the adjusted antenna diagram from the UE 100 of the mobile communication system 400. The apparatus 40 is further configured to store 24 the information on the adjusted antenna diagram and to provide 26 the information on the adjusted antenna diagram to another UE 110, 120 of the mobile communication system to support antenna diagram adjustments at the other UE 110, 120. For example, antenna data or information on the adjusted antenna diagram may be filtered or in general processed to be used for other UEs. The procedure might be averaging, classification, modeling etc.

It should be noted that in some embodiments a UE 100 may also be provided with its own parameters, for example, if it is revisiting a location or re-travelling a road section, its former antenna parameters or setting may be re-used.

Embodiments may enable an approach for optimized link quality based on the combination of the reconfigurable smart antenna technology and 3GPP signaling and management. For example, embodiments may enable a parameter optimization for reconfigurable antennas and/or smart antenna systems for cellular wireless technologies. For example, in embodiments an analysis or classification of a use and position (e.g. position on a vehicle) of antenna implementations may be carried out. Results may be used to improve a communication link quality in particular, but not exclusively, for vehicles. Coverage may be extended compared to standard procedures. Based on the extended coverage, which is achieved by using and re-using antenna configuration, new possibilities for mobility management arise. For example, the ability to quickly and reliably reconfigure smart antennas may offer new cell handover management opportunities. Some embodiments may be implemented within the mobile communication system, e.g. as part of the 3GPP protocols. Additionally or alternatively, an implementation outside the mobile communication system 400 is conceivable, which is also referred to as over-the-top (OTT) implementation.

Such implementations may include respective signaling, measurement procedures, data management and interface specifications. Signaling may be carried out between vehicles directly (V2V, V2I-I2V) or using analysis functions, such as the network data analytics function (NWDAF) or cloud/edge-cloud processing (which are implemented at potential network entities 200).

In the following some embodiments will be explained in detail. For example, Fifth Generation (5G) wireless access may be expected to embrace mm-Wave frequencies to provide multi-Gbps data rates, typically in femto, pico, or metro cell type of deployments. Free space propagation or path loss increases at higher frequencies and may be compensated by exploiting antenna directivity. This may be achieved using high gain adaptive BeamForming (BF) solutions. Adaptive beam-steering may be implemented by analog phase shifters, fully digitally, e.g. by equipping each antenna with a fully digital transmit/receive path, or as hybrid digital/analog solutions, e.g. by connecting each digital transmit/receive path to a set of antennas via analog phase shifters. Base station and UE antenna arrays may include, e.g. 8, 16, 32, 64 or more antenna elements, e.g. tiny horn antenna elements.

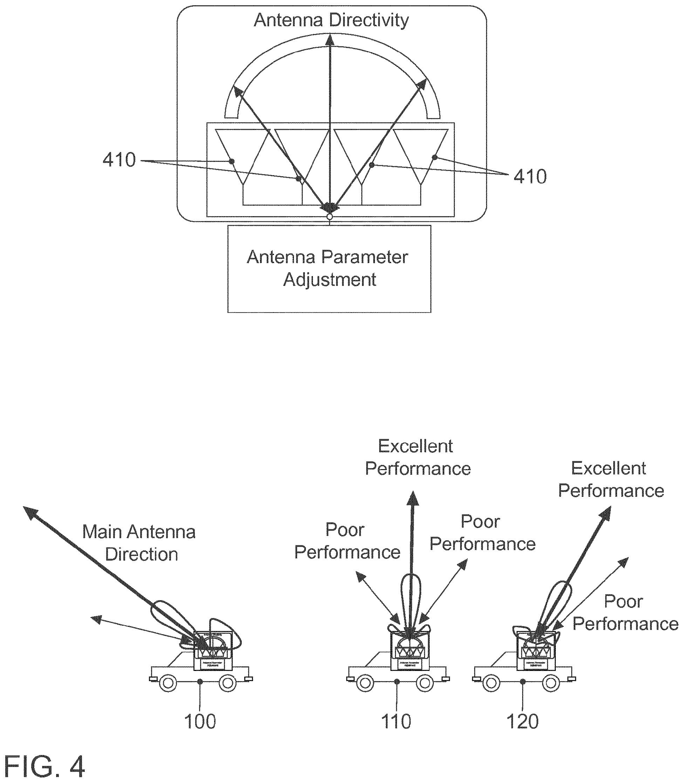

The beamforming or the adjusting of antenna diagrams as referred to with respect to embodiments described herein makes use of controlled superposition of the signals transmitted or received at the respective transmit/receive antennas. Different antenna gains result for different directions (for transmission and/or reception). The different antenna gains for the different directions can be represented by an antenna diagram. For example, a polar chart is used with the antenna in the center and an indication of the respective antenna gain around it. One or more beams may be generated, wherein a beam is a local and/or global maximum antenna gain for a certain direction in the antenna diagram. This will be further outlined with respect to Fig. 4. A defined geometrical configuration of the plurality of transmit/receive antennas may be used together with phase shifts introduced to the respective transmit or receive signals in order to achieve defined superposition of the signals with respect to their direction relative to the plurality of transmit/receive antennas. In other words, in some embodiments constructive or destructive superposition of these signals may be used.

In particular, vehicles may be equipped with an onboard communication unit and therefore become a vehicular UE (vUE). vUEs are equipped with a smart/reconfigurable antenna systems, which can steer an antenna directivity and other link quality depended parameters (such as antenna correlation). The onboard communication unit may connect with the vehicle system (incl. navigation) and/or vehicle server (remote driving control center). Therefore, vUEs may know the route (position and time) and may use this data to improve the communication. vUEs/vehicle server or a data service provider (vServer) may calculate an improved or even optimal antenna directivity depending on the route, network measurements/data base. The parameters used to adjust the directivity may be referred to as "steering parameters". vUEs may also be able to provide the steering parameters and/or capabilities of the reconfigurable smart antenna system to the mobile network operators MNOs. Some vUEs may also be able to share some of information with other vUEs via V2N2V (or in general: V2X). vUEs might require additional measurement routines and signaling procedures. The same consideration as made for vUEs may also apply to regular UEs, e.g. to smart phones, tablets or laptop computer, which may, for example, travel in a bus or train or other vehicle along a certain trajectory or path.

Adaptive antenna directivity of reconfigurable antennas is illustrated by Fig. 4. Such technology is also referred to as beamforming and may be a fundamental technology at least in some embodiments. Fig. 4 illustrates antenna diagram adjustment in an embodiment. Fig. 4 shows four antenna elements 410 at the very top, which are used to implement antenna directivity, e.g. to focus transmitted (tx) or received (rx) energy to a certain direction (exemplified by the arrows pointing in different directions). This can be achieved by using different antenna parameters, e.g. different phase or amplitude settings for the signals (ty, rx) of the antenna elements. Different parameter settings can be used to achieve different antenna diagrams, e.g. to point a main lobe of the antenna diagram in different directions. Fig. 4 shows at the bottom on the left a vehicle 100, which directs its main lobe (direction of maximum antenna gain) to the left. At the same time the antenna diagram contains directions of zero antenna gain (indicated by thinner arrows), which are also referred to a spatial nulls. It is to be noted that it might not always be desirable to direct a main lobe towards a communication partner, this might maximize signal energy but interference may be the determining factor. It might be more desirable to suppress strong interferers (direct spatial nulls or low antenna gain in their direction) in order to achieve the best signal-to-interference-(and-noise-)ratio.

Fig. 4 shows at the bottom in the middle and at the right further illustrations of different beam patterns or antenna diagrams of vehicles 110, 120. As shown in the diagrams, there are different directions of high antenna gain (excellent performance) and low antenna gain (poor performance). Excellent performance may be interpreted in the sense of highest antenna gain or best performance under current circumstances.

Reconfigurable smart antenna systems may offer the opportunity to steer the receive direction capabilities of an antenna/communication system as shown in Fig. 4. Depending on the steering parameters of the antenna system, the receive and transmit performance improves for specific angular ranges at the "expense" of other directions.

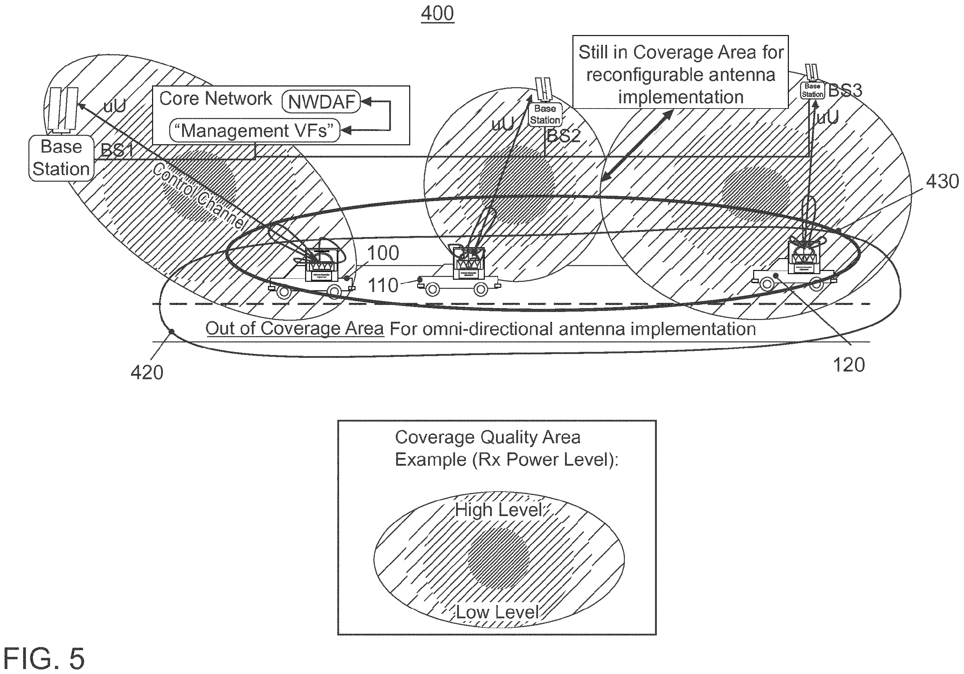

Fig. 5 illustrates adaptive adjusted antenna directivity and link performance/coverage in an embodiment. Fig. 5 shows three base station transceivers BS1, BS2, and BS3 (network entities 200), each generating a cell with a coverage area (of the air or Uu interface) as indicated by the shadings. Each of the base station transceivers BS1, BS2, and BS3 is coupled to a core network (CN) and control components (network entities 200) herein, such as the NWDAF and management of virtual functions (VFs). The present embodiment relates to a 5G network. In general, any core network or technology is conceivable, e.g. also an evolved packet core (EPC) or a network in interwork between a RAN and 5GC (5G CN) etc.

The above described method 20 may be implemented at different network entities 200 in different embodiments. For example, some network entities, at which the method 20 could be implemented, are base station transceivers, NWDAF, VFs, CN-components, etc. As further indicated by the diagram at the bottom of Fig. 5 the receive power level is higher close to the base station at the center of a cell and lower at the cell edge. Fig. 5 further shows an out of coverage area 420 for an omnidirectional antenna implementation and another coverage area 430 that can be covered using smart or reconfigurable antenna implementations. Fig. 5 further shows three UEs or vehicles 100, 110, 120 using beamforming (reconfigurable or adjustable antennas) and travelling along a road section.

Because of weak receive signals in some areas, a UE 100, 110, 120 may realize low connectivity quality or even realize to be out of the coverage area of a base station (lower region 420 indicated in Fig. 5). Because of the usage of reconfigurable/smart antenna implementations, the connectivity quality will potentially improve as the received signal level increase. In embodiments, antenna parameters may be measured and stored for reconfiguration and re-use. For example, the information on the adjusted antenna diagram may comprise one or more elements of the group of information on a location of the UE, information on a direction of a main lobe of the adjusted antenna diagram, information on a UE type, information on one or more steering parameters for the adjustable antenna and/or information on an antenna type used at the UE. As an example, such information may be communicated using respective control channels as indicated in Fig. 5.

The information on the adjusted antenna may comprise information on a UE type and/or information on an antenna type used at the UE. The method 20 may comprise providing the information on the adjusted antenna to the other UE if the other UE is of the same type and/or use the same antenna type. The information on the adjusted antenna diagram may comprise one or more steering parameters for an adjustable antenna.

In embodiments, such information (provided by or to the UE) may comprise anything or any data that allows reconstructing an antenna pattern at a UE 100, 110, 120 at least partly, e.g. directions for lobes, coordinates of a base station antenna to point to, weighting parameters, etc. UE type and antenna type may be taken into account. For example, vehicle may operate more advanced antennas because of the larger outer surface and enhanced power supply as compared to handheld UEs. The type of antenna, e.g. in terms of a number of antenna elements and individual antenna element characteristics may be considered. The network may receive information on adjusted antenna diagrams from a plurality of UEs of the mobile communication system 400 and may therefore be enabled to generate a bigger picture, e.g. a sort of antenna parameter map. Moreover, the network may apply averaging or statistics to further improve or even optimize antenna parameters for a certain location. The information on the adjusted antenna may comprise information on a location of the UE. The method 20 may further comprise providing the information on the adjusted antenna diagram to another UE of the mobile communication system 400 for use at that location.

Likewise, at a UE 100, 110, 120 such information may be received, e.g. the above described method 10 may comprise receiving information supporting antenna diagram adjustments from the mobile communication system 400, e.g. from the network entity (200) (over the Uu interface from the base station transceivers BS1, BS2, and BS3). As outlined above the information supporting antenna diagram adjustments may comprise one or more elements of the group of information on a location at which the information supporting the antenna diagram adjustments should be applied, information on a direction of a main lobe of the adjusted antenna diagram, information on a UE type, information on one or more steering parameters for the adjustable antenna and/or information on an antenna type for which the information supporting the antenna diagram adjustments should be applied.

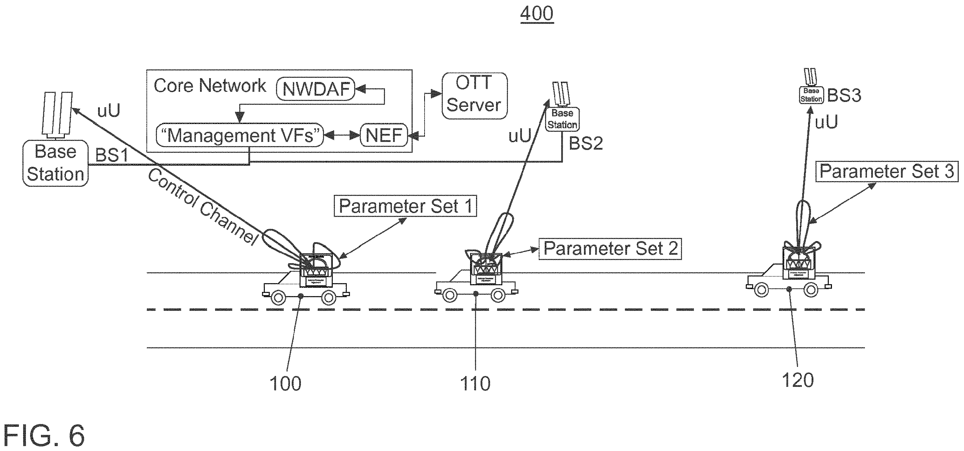

Fig. 6 illustrates approaches to identify optimal or improved parameters for adaptive reconfigurable smart antenna systems in embodiments. Fig. 6 shows a similar scenario as Fig. 5. The three UEs provide their antenna information in terms of parameter set 1, parameter set 2, and parameter set 3. For example, these parameter sets may include information on which spatial concept the UE supports, e.g. beamforming, Multiple-Input-Multiple-Output (MIMO) scheme, Coordinated Mulitpoint Transmission (COMP), Space-Time-Coding, etc. In addition, the CN in Fig. 6 shows a network exposure function (NEF another network entity 200) that allows sharing a selected set of CN information with external components, e.g. an over the top (OTT) server as also indicated in Fig. 6.

In embodiments several approaches for finding the steering and usage of preferable antenna steering parameters are possible. The MNO network may use the NWDAF as central statistical function for the steering parameters. For example, NWDAF is used for data analysis. In further embodiments, another NF (network function) or AF (application function) may be involved in finding the steering parameters. The management functions (as e.g. policy control function (PCF), session management function (SMF), access and mobility management function (AMF)) subscribe the required NWDAF service. The network may request measurements from the vUEs 100, 110, 120 and process the data in the NWDAF.

For example, a vUE 100, 110, 120 may inform the network about a) specifics of the implementation and b) intentions which have impact to the link performance and the network steering procedures (hand overs, load balancing, service continuity etc.). As shown in Fig. 6, Over-The-Top (OTT) solutions, where the OTT server controls the measurement procedures independently of the MNO, are also conceivable. This approach may be used for multi-operator strategies and may offer data mining services for the OTT service provider. In further embodiments a mix of MNO and OTT based methods are conceivable. The MNO may get the processed measurement data to improve its service.

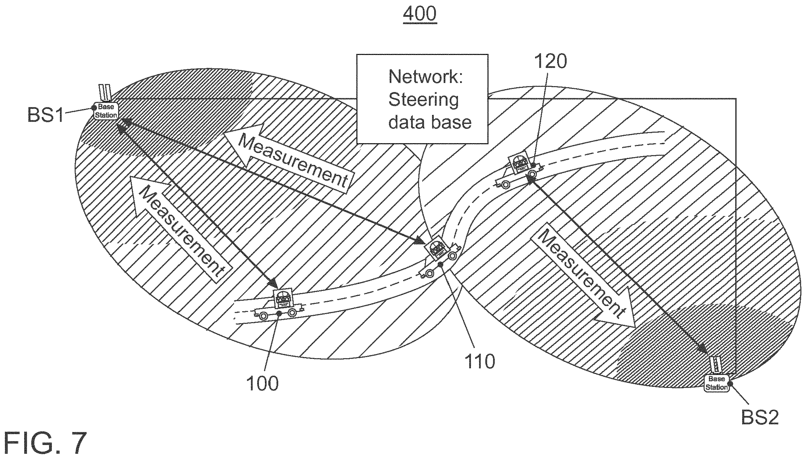

Fig. 7 illustrates a steering parameter data base in an embodiment. Fig. 7 shows two base stations BS1 and BS2 generating the indicated coverage areas. Three vehicles 100, 110, 120 are driving on a road running through both cells. The vehicles 100, 110, 120 report their measurements (e.g. antenna adjustment information) to the base station transceivers BS1, BS2.

In this embodiment the positions/locations of the vUE 100, 110, 120 and their antenna pattern are combined to achieve the best link quality. The vUE antenna system is able to find the best antenna steering parameter set *s_b* (*p*) at position p of the vUE 100. These parameters (steering parameters, position, antenna type, vehicle type etc.) and additional data (as achievable performance, traffic situation etc.) are stored in the network (steering data base as network entity 200 in network of MNO or/and OTT). This data can be known and used in the network of the MNO for system optimization. The measurements can be initiated by the MNO or by an OTT server/control server or the vUE 100.

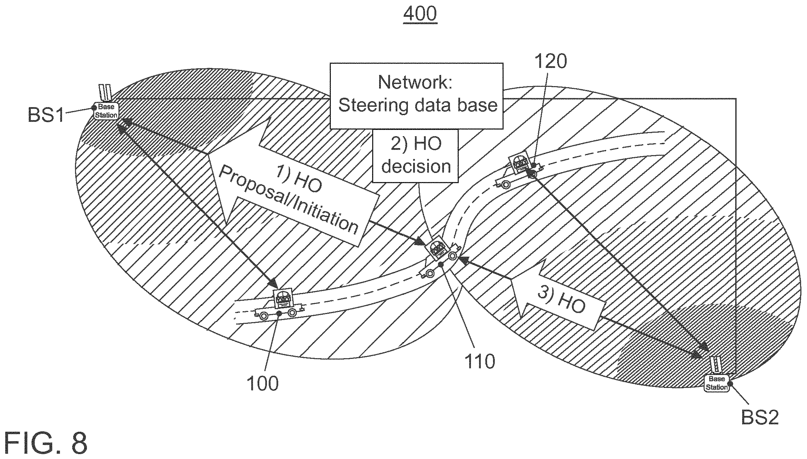

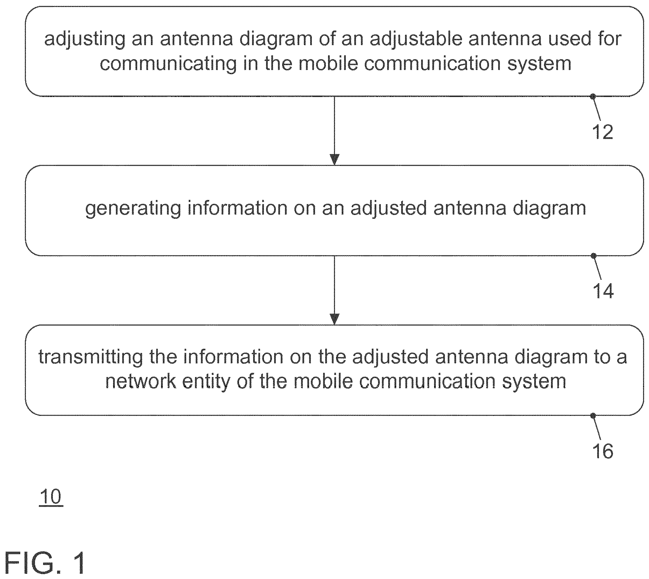

Fig. 8 illustrates UE based Hand Over (HO) initiation in an embodiment. Fig. 8 shows another embodiment of a mobile communication system 400 with two base station transceivers BS1, BS2 and three UEs 100, 110, and 120.

As the vUE 110 knows its current position and its positions for the next few minutes very precisely (this is usually unknown by the MNO) and its expected link performance and antenna steering parameters, it can propose to initiate/propose a handover procedure (incl. data/service transfer to a mobile edge cloud), e.g. in a first step. This may improve the system and HO management for the MNO. The network compares the incoming measurement data and manages the situation and policies and makes a decision, e.g. in a second step. Based on the decision a HO is performed or delayed or not performed, e.g. in a third step. Handover or mobility procedures in general may benefit from the enhanced coverage through improved antenna performance in embodiments. For example, the handover area, i.e. the area in which communication with both cells is possible, is enlarged. This can be exploited by the network as more headroom (time for mobility procedures) is available. For example, a signaling overhead can be reduced and signaling can be more balanced. Signaling resources can be better managed. Handover failures may be reduced. In some embodiments a number of handovers may be reduced.

The information supporting the antenna diagram adjustments on the adjusted antenna diagram may comprise a time course or a road map of antenna settings. The method 10 for the UE may comprise predicting a quality of service based on the time course or the road map, and planning a handover of the UE based on the predicted quality of service. The time course or road map may be a series of values over time or along road. Hence, a series of antenna diagrams or antenna diagram adjustments may be determined. The series may be relative to time or location, e.g. along a path or road. The series may provide antenna diagram information per location, e.g. in terms of a road map/antenna diagram map. Such a series along a road may be converted into a time series taking into account a velocity or a predicted velocity of a UE/vehicle.

As outlined above, the UE may initiate HO later, earlier, etc. On the network side the method 20 may further comprise determining a time course or a road map of antenna settings based on the received information on the adjusted antenna diagram, and provide information on the time course or the road map to the other UE. Particularly in embodiments with enlarged HO-area an improve radio resource management may result. As the resources in the HO-area can be used more efficiently, less resource for such control signaling may be required and more resource for payload transmission may be available.

As already mentioned, in embodiments the respective methods may be implemented as computer programs or codes, which can be executed on a respective hardware. Hence, another embodiment is a computer program having a program code for performing at least one of the above methods, when the computer program is executed on a computer, a processor, or a programmable hardware component. A further embodiment is a computer readable storage medium storing instructions which, when executed by a computer, processor, or programmable hardware component, cause the computer to implement one of the methods described herein.

A person of skill in the art would readily recognize that steps of various above-described methods can be performed by programmed computers, for example, positions of slots may be determined or calculated. Herein, some embodiments are also intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art and are to be construed as being without limitation to such specifically recited examples and conditions. Moreover, all statements herein reciting principles, aspects, and embodiments of the invention, as well as specific examples thereof, are intended to encompass equivalents thereof. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, Digital Signal Processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the detailed description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

### List of reference signs

- 10: method for user equipment, UE, of a mobile communication system
- 12: adjusting an antenna diagram of an adjustable antenna used for communicating in the mobile communication system
- 14: generating information on an adjusted antenna diagram
- 16: transmitting the information on the adjusted antenna diagram to a network entity of the mobile communication system
- 20: method for a network entity of a mobile communication system
- 22: receiving information on an adjusted antenna diagram from UE of the mobile communication system
- 24: storing the information on the adjusted antenna diagram
- 26: providing the information on the adjusted antenna diagram to another UE of the mobile communication system to support antenna diagram adjustments at the other UE
- 30: apparatus for UE
- 32: one or more interfaces
- 34: control module
- 40: apparatus for network entity
- 42: one or more interfaces
- 44: control module
- 100: UE
- 110: UE
- 120: UE
- 200: Network entity
- BS1, BS2, BS3: base station
- 400: mobile communication system
- 410: antenna element
- 420: out of coverage
- 430: extended coverage

## Claims

1. A method (10) for user equipment, UE (100; 110; 120), of a mobile communication system (400), the method (10) comprising
adjusting (12) an antenna diagram of an adjustable antenna used for communicating in the mobile communication system (400);
generating (14) information on an adjusted antenna diagram; and
transmitting (16) the information on the adjusted antenna diagram to a network entity (200) of the mobile communication system (400).

2. The method (10) of claim 1, wherein the information on the adjusted antenna diagram comprises one or more elements of the group of information on a location of the UE (100; 110; 120), information on a direction of a main lobe of the adjusted antenna diagram, information on a UE type, information on one or more steering parameters for the adjustable antenna and/or information on an antenna type used at the UE (100; 110; 120).

3. The method (10) of one of the claims 1 or 2, further comprising receiving information supporting antenna diagram adjustments from the network entity (200) of the mobile communication system (400).

4. The method (10) of claim 3, wherein the information supporting antenna diagram adjustments comprises one or more elements of the group of information on a location at which the information supporting the antenna diagram adjustments should be applied, information on a direction of a main lobe of the adjusted antenna diagram, information on a UE type, information on one or more steering parameters for the adjustable antenna and/or information on an antenna type for which the information supporting the antenna diagram adjustments should be applied.

5. The method (10) of one of the claims 3 or 4, wherein the information supporting the antenna diagram adjustments on the adjusted antenna diagram comprises a time course or a road map of antenna settings, and wherein the method (10) comprises predicting a quality of service based on the time course or the road map, and planning a handover of the UE (100; 110; 120) based on the predicted quality of service.

6. A method (20) for a network entity of a mobile communication system (400), the method (20) comprising
receiving (22) information on an adjusted antenna diagram from user equipment, UE (100; 110; 120), of the mobile communication system (400);
storing (24) the information on the adjusted antenna diagram; and
providing (26) the information on the adjusted antenna diagram to another UE (100; 110; 120) of the mobile communication system (400) to support antenna diagram adjustments at the other UE (100; 110; 120).

7. The method (20) of claim 6, wherein the information on the adjusted antenna comprises information on a location of the UE(100; 110; 120), and wherein the method (20) further comprises providing the information on the adjusted antenna diagram to the other UE (100; 110; 120) of the mobile communication system (400) for use at the location.

8. The method (20) of one of the claims 6 or 7, comprising receiving information on adjusted antenna diagrams from a plurality of UEs (100; 110; 120) of the mobile communication system (400).

9. The method (20) of one of the claims 6 to 8, wherein the information on the adjusted antenna comprises information on a UE type and/or information on an antenna type used at the UE (100; 110; 120).

10. The method (20) of claim 9, further comprising providing the information on the adjusted antenna to the other UE (100; 110; 120) if the other UE (100; 110; 120) is of the same type and/or use the same antenna type.

11. The method (20) of one of the claims 6 to 10, wherein the information on the adjusted antenna diagram comprises one or more steering parameters for an adjustable antenna.

12. The method (20) of one of the claims 6 to 11, further comprising determining a time course or a road map of antenna settings based on the received information on the adjusted antenna diagram, and providing information on the time course or the road map to the other UE (100; 110; 120).

13. An apparatus (30) for user equipment, UE (100; 110; 120), of a mobile communication system (400), the apparatus (30) comprising
one or more interfaces (32) for communicating in the mobile communication system (400); and
a control module (34) configured to carry out one of the methods (10) of claims 1 to 5.

14. An apparatus (40) for a network entity (200) of a mobile communication system (400), the apparatus (40) comprising
one or more interfaces (42) for communicating in the mobile communication system (400); and
a control module (44) configured to carry out one of the methods (20) of claims 6 to 12.

15. A computer program having a program code for performing one of the methods (10; 20) according to one of the claims 1 to 12, when the computer program is executed on a computer, a processor, or a programmable hardware component.
